# EUROPÄISCHE PATENTSCHRIFT

(11) **EP 4 386 501 B1**
(45) Veröffentlichungstag und Bekanntmachung des Hinweises auf die Patenterteilung: **25.03.2026**
(21) Anmeldenummer: 22212854.8
(22) Anmeldetag: 12.12.2022
(51) Int. Cl.: G05D 1/00

(54) **ANORDNUNG UND VERFAHREN ZUR ERMITTLUNG VON PARAMETERN EINER FAHRBAHN VOR EINEM FAHRZEUG**
ARRANGEMENT AND METHOD FOR DETERMINING PARAMETERS OF A ROADWAY IN FRONT OF A VEHICLE
DISPOSITIF ET PROCÉDÉ DE DÉTERMINATION DE PARAMÈTRES D'UNE VOIE DE CIRCULATION DEVANT UN VÉHICULE

(43) Veröffentlichungstag der Anmeldung: 19.06.2024
(73) Patentinhaber: Technische Universität Ilmenau, 98693 Ilmenau (DE)
(72) Erfinder: Beliautsou, Viktar, 98693 Ilmenau (DE); Ivanov, Valentin, 99085 Erfurt (DE); Fedorova, Aleksandra, 98693 Ilmenau (DE)
(74) Vertreter: Donath, Dirk

(56) Entgegenhaltungen:
- US-A1- 2019 227 555
- US-A1- 2020 116 195
- US-A1- 2021 356 279

## Beschreibung

Die Erfindung betrifft eine Anordnung und ein Verfahren zur Ermittlung von Parametern einer Fahrbahn vor einem Fahrzeug, insbesondere zur Ermittlung der Fahrbahnparameter für die Unterstützung der Fahrdynamikregelung eines fahrenden Fahrzeugs, bspw. bei schadhaften Straßen und Wegen sowie im Gelände.

Bekannt ist, dass ein Fahrdynamikregelungssystem, wie bspw. das Antiblockiersystem, die Antriebsschlupfregelung, das elektronische Stabilitätsprogramm und das Drehmomentverteilungssystem in den meisten Fällen Referenzparameter, wie bspw. die Fahrzeuggeschwindigkeit, benötigt, um eine sichere Trajektorie zu verfolgen.

Aufgrund der begrenzten Verfügbarkeit von am Fahrzeug verbauten Sensoren und deren Reichweite ist es jedoch oft nicht möglich, die Referenzparameter unter unsicheren Bedingungen genau und korrekt zu bestimmen.

Dieses Problem wird noch verschärft, wenn der Fahrer das Fahrzeug unter schwierigen Fahrverhältnissen, wie z.B. bei Nebel oder bei einer Bergfahrt, fährt.

Einige Verbesserungen für das Fahren einer sicheren Trajektorie können erreicht werden, wenn der Fahrer Informationen aus verschiedenen Perspektiven erhält (wie von einem Navigator bei einem Rennen) oder wenn die Fahrzeugsensoren die Route im Voraus genau kennen (was bei unbemannten Fahrzeugen möglich ist). Beim herkömmlichen Fahren sind diese Optionen jedoch derzeit noch nicht möglich.

CN 110595495 A offenbart den Einsatz einer Drohne zur Bestimmung der Route eines Fahrzeugs vermittels einer Verbindung zwischen dem Fahrzeug und einem Satelliten auf der Grundlage gesammelter Daten.

Der Nachteil dieser technischen Lösung besteht darin, dass keine Informationen über die Straßenoberfläche (bspw. Unebenheiten, die die Fahrzeugbewegung beeinflussen), die Straßenneigung, den Reibkoeffizient der Fahrbahn und fahrbahnbeeinflussende Umweltbedingungen (bspw. Gegenstände auf der Fahrbahn) ermittelt und verarbeitet werden.

Derzeit sind bereits Lösungen bekannt, die es ermöglichen, die Qualität der Fahrdynamikregelung unter Berücksichtigung verschiedener Faktoren des Fahrzeugs zu verbessern.

So offenbart US 7 590 481 B2 bspw. ein integriertes Steuergerät, welches Eingangsdaten von einem Block von Sensoren empfängt und verarbeitet. Das Sensorsystem umfasst dabei eine Insassensensorgruppe, eine Umgebungssensorgruppe, eine Aufprallsensorgruppe, eine Aktorspezifische Sensorgruppe und eine Bewegungssensorgruppe.

Der Nachteil dieser technischen Lösung besteht darin, dass die Sensoren keine Umweltsensorgruppe für Parameter, wie bspw. die Temperatur, den Niederschlag, die Straßenbedingungen, die Region und die Position aufweist, und auch nicht sämtliche dieser Parameter ohne weiteres von fahrzeugmontierten Sensoren gemessen werden können, so dass durch das Fehlen der Kenntnis dieser externen Parameter im Voraus keine Unterstützung des Systembetriebs im integrierten Steuergerät möglich ist.

US 9 506 774 B2 lehrt, die Trajektorie eines Anhängers anhand von Satellitenbildern auszuwählen. Auf diese Weise weiß der Fahrer oder das autonome Fahrzeug bereits vor Beginn der Navigation, wie es seine Fahrstrecke richtig planen muss.

US 10 611 366 B2 offenbart eine vor einem Fahrzeug fliegende Drohne, welche die Steuerung des Fahrzeugs ermöglicht, um zu verhindern, dass es von der Straße abkommt. Das vorgeschlagene Verfahrensschema erfordert Informationen über die Form der Straße vor dem Fahrzeug als Eingangsdaten.

Dazu lehrt die US 10 611 366 B2, dass die erforderliche Trajektorie anhand der Informationen über die Route und die Fahrweise des Fahrers im Voraus festgelegt werden kann. Darüber hinaus kann die Drohne als Fahrzeugassistent die Aufgabe übernehmen, die Route vor dem Fahrzeug zu definieren (siehe auch US2019/227555 A1; US2020/116195 A1; US2021/356279 A1).

Für den vorgenannten Stand der Technik lässt sich zusammenfassen, dass neben fahrzeuginternen Systemen bereits auch Systeme außerhalb von Fahrzeugen bekannt sind, welche das Fahrverhalten der Fahrzeuge direkt oder indirekt beeinflussen.

Der Nachteil all dieser bekannten technischen Lösungen ist jedoch, dass keine vorausschauende Ermittlung der Parameter einer Fahrbahn vor einem Fahrzeug im Bereich von bis zu achthundert Metern vor dem Fahrzeug für die Unterstützung der Fahrdynamikregelung des Fahrzeugs möglich ist, was die Sicherheit der Fahrt der Fahrzeuge erhöhen würde.

Der Erfindung liegt daher die Aufgabe zu Grunde, eine Anordnung zur Ermittlung von Parametern einer Fahrbahn vor einem Fahrzeug für die Unterstützung der Fahrdynamikregelung des Fahrzeugs anzugeben, welche die zuvorstehend genannten Nachteile des Standes der Technik vermeidet, insbesondere die Fahrt des Fahrzeugs auf der Fahrbahn, bspw. bei schadhaften Straßen und Wegen sowie im Gelände, in vorausschauender Art und Weise beeinflusst, indem die Fahrbahnparameter, welche nicht unmittelbar vor dem Fahrzeug mit fahrzeuginternen Sensoren erfassbar sind, sondern in einem weiteren Abstand vor dem Fahrzeug von bis zu tausend Metern zur Erfassung vorliegen, ohne dass sie schon mit den fahrzeuginternen Sensoren erfasst werden, zur Steuerung und Regelung der Fahrdynamik des Fahrzeugantriebs einsetzbar sind.

Erfindungsgemäß wird diese Aufgabe durch die Merkmale des 1. und 12. Patentanspruchs gelöst.

Weitere günstige Ausgestaltungsmöglichkeiten der Erfindung sind in den nachgeordneten Patentansprüchen angegeben.

Die vorliegende technische Lösung besteht darin, den Beobachtungspunkt der Fahrzeugsensoren von einem Fahrzeug auf eine Drohne zu verlagern, die vor dem Fahrzeug fliegt und im Voraus eine Vielzahl von Fahrbahnparametern ermittelt, wobei die von der Drohne ermittelten Informationen bei der Steuerung und Regelung der fahrzeugseitigen Systeme verwendet werden.

Die Drohne, welche vor einem fahrenden Fahrzeug fliegt, misst dabei vorteilhaft verschiedene Fahrbahnparameter und erfasst Messdaten und Informationen in Echtzeit. Die weitere Verwendung der gemessenen Informationen dient der Echtzeitanpassung von Funktionen und Algorithmen der fahrzeuginternen Regelsysteme und der Optimierung der Fahrzeugbewegung.

Dazu umfasst die Anordnung zur Ermittlung von Parametern einer Fahrbahn vor einem Fahrzeug (bspw. bei schadhaften Straßen und Wegen oder bei Fahrten im Gelände) für die Unterstützung der Fahrdynamikregelung des Fahrzeugs (mittels an sich bekannter Fahrdynamikregelungssysteme, wie bspw. dem Antiblockiersystem, der Antriebsschlupfregelung, dem elektronische Stabilitätsprogramm oder dem Drehmomentverteilungssystem) eine Drohne zum Fliegen über der Fahrbahn, ein globales Positionierungssystem und ein Fahrzeug zum Fahren auf der Fahrbahn, wobei die Drohne mit
▪ mindestens einem Antriebssystem für die Bewegung und Steuerung der Drohne,
▪ einem Sensorsystem zum Aufnehmen von Bildern der Fahrbahnoberfläche in Form einer Kamera, wobei die Kamera ein Objektiv zur Einstellung der Brennweite besitzt,
▪ einem Abstandssensor, der die Größe der Objekte auf der Fahrbahn, die Fahrbahnrauigkeit und die Fahrbahnneigung misst, wobei der Abstandssensor als Lidar, Radar oder Ultraschallsensor ausgeführt sein kann,
▪ einem dreiachsigen Kardanrahmen in Form eines Gimbals, der das Sensorsystem in Form der Kamera mit dem Objektiv und den Abstandssensor in Form des Lidar in einer horizontalen Position hält,
▪ elektronischen Steuerungskomponenten, die die Position des dreiachsigen Kardanrahmens steuern,
▪ einer Vibrationsplatte, welche die Vibrationen des Sensorsystems in Form der Kamera mit dem Objektiv und des Abstandsensors in Form des Lidars dämpft,
▪ einer Telemetrievorrichtung, die die Datenübertragung zwischen der Drohne und dem Fahrzeug sicherstellt,
▪ einem Sensor zur Bestimmung der globalen Position der Drohne,
▪ einem Sensor zum Erfassen von Objekten in der Bewegungsbahn der Drohne
▪ und einem Rahmen zum Tragen dieser Drohnen- Komponenten ausgestattet ist
und wobei das Fahrzeug ein Fahrwerk und einen Antrieb umfasst sowie mit
▪ mindestens einem Fahrdynamikregelungssystem,
▪ einem Regelungssystem in Form eines fahrzeuginternen Regelgeräts, das die Fahrzeugbewegung durch die Regelung des Fahrdynamikregelungssystems bestimmt,
▪ einer Fahrzeugkomponente des Global Positioning System zur Bestimmung der Fahrzeugposition,
▪ einem Inertialsensor, einer Recheneinheit zur Verarbeitung der gemessenen Daten sowie einer digitalen Karte und
▪ einem Telemetriegerät, das eine kabellose daten- und informationsleitend Verbindung zwischen der Drohne und dem Fahrzeug generiert,
ausgestattet ist.

Die kabellose daten- und informationsleitend Verbindung ist dabei zum einen in Form eines Datenstroms von der Drohne zum fahrzeuginternen Regelgerät und zum anderen in Form eines Datenkanals vom Fahrzeug zur Drohne ausgeführt, wobei die Drohne ein Sichtfeld aufweist, welches von der Drohne bei ihrem Flug auf eine Fahrbahn gerichtet werden kann, die sich vor dem Fahrzeug befindet und auf welcher das Fahrzeug fährt (dabei ist die Drohne teilautonom sowie vermittels der Sensordaten sowie der über den Datenkanal vom Fahrzeug zur Drohne verlaufenden Daten gesteuert) und wobei der von der Drohne mit ihren Sensoren erzeugte Datenstrom zum fahrzeuginternen Regelgerät führt, welches die Fahrt des Fahrzeugs auf der Fahrbahn beeinflusst, so dass die Fahrdynamik des Fahrzeugs regelbar ist.

Das System bewegt sich während der gesamten Betriebszeit der Drohne auf einer bestimmten, vom Fahrer gewünschten Strecke, wobei mit Hilfe von fahrzeuginternen Systemen, wie z.B. GPS, die Fahrzeugposition in globalen Koordinaten bestimmt wird.

Mithilfe einer aus der Regelungstechnik bekannten Vorhersage- und Schätzungslogik legen die Anordnung und das Verfahren zur Ermittlung der Fahrbahnparameter einer Fahrbahn vor einem Fahrzeug für die Unterstützung der Fahrdynamikregelung des Fahrzeugs fest, welcher Teil der Fahrbahn überwacht werden soll.

Die Drohne bewegt sich dabei vor dem Fahrzeug und bestimmt mit ihren (fahrzeugexternen) Sensoren Informationen über die Fahrbahn.

Anhand der gemessenen Daten kann die Bewegung des Fahrzeugs durch die Fahrdynamikregelungssysteme gesteuert werden, um diesen Fahrbahnabschnitt sicherer oder komfortabler zu passieren.

Mit einer solchen Systemkonfiguration lässt sich das Problem der Messung von Daten lösen, die für die bordeigenen Fahrzeugsensoren aufgrund des begrenzten Sichtfelds oder der langsamen Reaktionszeit nicht zugänglich sind. Die fliegende Drohne befindet sich vor dem Fahrzeug in einer sehr günstigen Position mit einem hinreichend großen Abstand zum Fahrzeug, so dass ausreichend Zeit verfügbar ist, um die Fahrbahn an dieser Position zu erfassen und zu vermessen sowie die gemessenen Daten der Fahrbahn zu verarbeiten und an das Fahrzeug zu übermitteln, bevor das Fahrzeug diese Position erreicht. Dazu fliegt die Drohne vorteilhaft in einem Bereich von 5 bis 1000 m, sehr vorteilhaft in einem Bereich von 5 bis 200 m, besonders vorteilhaft in einem Bereich von 10 bis 60 m vor dem Fahrzeug. Dies gewährleistet auch, dass die Daten mit komplexen Berechnungsmethoden verarbeitet werden können.

Mit den von der Drohne gelieferten Daten können über das Regelungssystem in Form eines fahrzeuginternen Regelgeräts verschiedene Funktionen realisiert werden, wie bspw.
- eine Anpassung der aktiven Radaufhängung des Fahrzeugs an die Fahrbahnunebenheiten und das Fahrbahnprofil,
- eine Anpassung der Bremskraftverteilung zwischen Vorder- und Hinterachse des Fahrzeugs an die Fahrbahnneigung,
- eine Identifizierung der Fahrbahnbereiche mit geringen Reibungseigenschaften und entsprechende Anpassung der Bremsregelung (eine komplexere Version ist dabei möglich, indem die Variation der Reibungsbedingungen auf dem geplanten Fahrzeugweg ermittelt und bei der Anpassung der Bremsregelung berücksichtigt wird),
- die Ermittlung der Krümmung der Fahrbahn und Anpassung der optimalen Fahrbahnkurve bei Kurvenfahrten oder Manövern,
   und
- die Bestimmung der Referenzgierrate für den Betrieb der Fahrzeugstabilitätskontrollsysteme, z. B. des elektronischen Stabilitätsprogramms, der Giermomentenkontrolle und des Drehmomentverteilungssystems (Torque Vectoring System).

Dazu umfasst das Verfahren folgende Schritte:
- eine Bestimmung der tatsächlichen und der vorhergesagten Trajektorie des Fahrzeugs sowie der Referenzposition des Fahrzeugs auf der Fahrbahn unter Verwendung des globalen Positionierungssystems, des Inertialsensors des Fahrzeugs und der digitalen Karte,
- eine Übermittlung der Informationen über die vorhergesagte Trajektorie des fahrenden Fahrzeugs an die fliegende Drohne,
- eine Festlegung des Referenzpfades des Fluges der Drohne, der mit der vorhergesagten Trajektorie des Fahrzeugs identisch ist,
- ein Aktivieren des Fluges der Drohne vor dem Fahrzeug entsprechend dem Referenzpfad, vorteilhaft in einem Bereich von 5 bis 1000 m vor dem Fahrzeug, sehr vorteilhaft in einem Bereich von 5 bis 200 m, besonders vorteilhaft in einem Bereich von 10 bis 60 m,
- eine kontinuierliche Erfassung der Informationen über die Fahrbahnparameter vermittels der auf der Drohne installierten Sensoren und Messgeräte,
- eine Markierung der erfassten Informationen über die Fahrbahnparameter mit den globalen Positionskoordinaten,
- eine Nachbearbeitung der markierten erfassten Informationen über die Fahrbahnparameter in einem für die Verwendung in den Fahrzeugbewegungssteuerungssystemen verständlichen Format,
- ein Speichern der erzeugten, nachbearbeiteten Informationen über die Fahrbahnparameter,
- eine Weiterleitung der erzeugten nachbearbeiteten Informationen über die Fahrbahnparameter an das globale Regelgerät des Fahrzeugs unter Verwendung eines Kommunikationskanals
   und
- eine Entscheidung durch des globalen Regelgeräts des Fahrzeugs auf der Grundlage der empfangenen Informationen über die Fahrbahnparameter und die bestimmte Referenzposition des Fahrzeugs, ob eine Abstimmung oder Optimierung der Fahrzeugbewegungssteuerung erforderlich ist,
- wobei, wenn die Korrektur der Fahrzeugbewegung erforderlich ist,
   ▪ das globale Regelgerät, welches einen übergeordneten Fahrdynamikregler umfasst, ein Referenzfahrzeugmodell verwendet, um die Referenzlängs-, - quer- oder - vertikalparameter der Fahrzeugdynamik zu generieren, die mit den Fahrdynamikregelungssystemen des Fahrzeugs realisiert werden,
   ▪ die erzeugten Referenzparameter in Form von Signalen an den untergeordneten Fahrdynamikregler übertragen werden, der sich in eine Vertikaldynamikregelungseinheit, eine Längsdynamikregelungseinheit sowie eine Querdynamikregelungseinheit aufteilt,
      und
   ▪ die Regelung der Fahrdynamikregelungssysteme durch den untergeordneten Fahrdynamikregler zur Korrektur der Fahrzeugbewegung erfolgt.

Die Verarbeitung der erfassten Informationen über die Fahrbahnparameter wird dabei durch eine im Fahrzeug installierte Verarbeitungseinheit (fahrzeuginternes Regelgerät) realisiert.

Hierbei werden die Referenzlängs-, -quer- oder -vertikalparameter der Fahrzeugdynamik als Eingangsdaten für den Autopilot-Navigationssteuerungsalgorithmus verwendet und es erfolgt die Bestimmung des Fahrbahnreibungskoeffizienten auf Basis der Lidar-Daten und der Bilddatenanalyse für die Weiterleitung des bestimmten Fahrbahnreibungskoeffizienten an das Fahrzeug, wobei dies auch getrennt für die linke und rechte Fahrbahn erfolgen kann, und die Nutzung der Informationen über den bestimmten Fahrbahnreibungskoeffizienten zur Radschlupf- Regelung dient.

Ebenso erfolgen die Bestimmung der Fahrbahnneigung und die Weiterleitung der bestimmten Fahrbahnneigung an das Fahrzeug. Dabei werden die Information über die bestimmte Fahrbahnneigung verwendet, um die Bremsregelung und / oder die Einstellung der Antriebsregelung des Fahrzeugs anzupassen.

Des Weiteren erfolgen die Bestimmung der Fahrbahnrauigkeit und die Weiterleitung der Informationen über die bestimmten Fahrbahnrauigkeit an das Fahrzeug, um eine Anpassung der Vertikalbewegungsregelung (Vertikaldynamikregelung) des Fahrzeugs zu generieren.

Die Bestimmung der Fahrbahnkrümmung und die Weitergabe der Information über die bestimmten Fahrbahnkrümmung an das Fahrzeug erfolgt zur Anpassung der Gierbewegungsregelung des Fahrzeugs, wobei die bestimmte Fahrbahnkrümmung auch dazu verwendet wird, die Trajektorie zu berechnen, die von einem Autopiloten im Falle eines automatisierten Fahrens realisiert wird.

Somit werden sämtliche von der vorausfliegenden Drohne für das nachfolgende Fahrzeug erfassten Informationen und aufgezeichneten Daten über eine Zwei-Wege-Kommunikation dazu verwendet, ein vorausschauendes Referenzfahrzeugmodell unter Einsatz eines Steuer- und Regelsystems in Form eines fahrzeuginternen Regelgeräts für die Bewegungsregelung (für die Fahrdynamikregelung) des Fahrzeugs zu erzeugen, wobei das fahrzeuginterne Regelgerät mit dem Fahrdynamikregelungssystem daten- und informationsleitend verbunden ist.

Die gesamte Kommunikation zum Austausch sämtlicher ermittelter Informationen und Daten in der vorgeschlagenen Anordnung und bei dem vorgeschlagenen Verfahren dient zur Bestimmung der Position des Fahrzeugs in globalen Koordinaten, zur Bestimmung der Position der Drohne in globalen Koordinaten sowie der zuvorstehend beschriebenen Zwei-Wege-Kommunikation, so dass auch ein autonomes Fahren des Fahrzeugs mit dieser technischen Lösung grundsätzlich möglich ist.

Die Erfindung wird nachstehend an Hand der schematischen Zeichnungen und des Ausführungsbeispiels näher erläutert, ohne auf dieses beschränkt zu werden. Es zeigen:
- Fig. 1:: eine schematische Darstellung einer Ausführungsform der Anordnung für ein Verfahren zur Identifizierung der Fahrbahnoberfläche (Ermittlung der Fahrbahnparameter) vor einem Fahrzeug,
- Fig. 2:: ein Schema der Fahrdynamikregelung eines Fahrzeugs unter Verwendung der Anordnung gemäß Fig. 1,
- Fig. 3:: eine schematische 3D- Übersichtsdarstellung einer, von der Drohne getragenen Sensoreinheit der Ausführungsform der Anordnung gemäß Fig. 1 und
- Fig. 4:: eine schematische 3D- Übersichtsdarstellung einer Drohne der Ausführungsform der Anordnung gemäß Fig. 1.

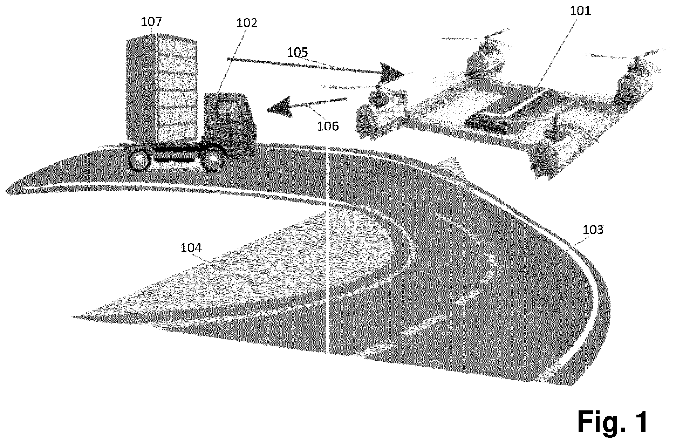

Die in der Fig. 1 dargestellte Ausführungsform einer Anordnung zur Ermittlung der Parameter einer Fahrbahn vor einem Fahrzeug, insbesondere zur Ermittlung der Fahrbahnparameter für die Unterstützung der Fahrdynamikregelung eines fahrenden Fahrzeugs umfasst eine Drohne **(101)** mit Sensoren und ein Fahrzeug **(102)** mit einem fahrzeuginternen Regelgerät **(107),** welches mit der Drohne **(101)** kabellos sowie daten- und informationsleitend in Verbindung steht.

Diese Verbindung besteht
- zum einen in Form eines Datenstroms **(106)** von der Drohne zum fahrzeuginternen Regelgerät **(107)** und
- zum anderen in Form eines Datenkanals **(105)** vom Fahrzeug **(102)** zur Drohne **(101),** wobei die Drohne **(101)** ein Sichtfeld **(104)** aufweist, welches von der Drohne **(101)** bei ihrem Flug auf eine Fahrbahn **(103)** gerichtet werden kann, die sich vor dem Fahrzeug **(101)** befindet und auf welcher das Fahrzeug **(101)** fährt.

Die Drohne **(101)** ist dabei mit einer Stromquelle versehen und teilautonom, vermittels der Sensordaten und der über den Datenkanal **(105)** vom Fahrzeug **(102)** zur Drohne **(101)** verlaufenden Daten gesteuert sowie flugfähig ausgestattet. Der von der Drohne **(101)** mit ihren Sensoren erzeugte Datenstrom **(106)** führt zum fahrzeuginternen Regelgerät **(107),** welches die Fahrt des Fahrzeugs **(102)** auf der Fahrbahn **(103)** beeinflusst.

Das Verfahren zur Ermittlung der Fahrbahnparameter einer Fahrbahn vor einem Fahrzeug, insbesondere zur Ermittlung der Fahrbahnparameter für die Unterstützung der Fahrdynamikregelung eines fahrenden Fahrzeugs wird wie folgt durchgeführt:
Ein Fahrzeug **(102)** fährt auf einer Fahrbahn **(103)** und eine unbemannte Drohne **(101)** fliegt vor ihm her, wobei der Abstand zwischen ihnen bspw. 60 m beträgt.

Indem die Drohne **(101)** dem Fahrzeug **(102)** entlang der Fahrbahn **(103)** vorausfliegt, erfasst sie mit ihren Sensoren innerhalb ihres Sichtfelds **(104)** verschiedene Informationen und Parameter (sozusagen vorausschauend), welche von dem Lenker des Fahrzeugs **(102)** und den am Fahrzeug **(102)** gemäß dem Stand der Technik fest verbauten Sensoren des nicht erfasst werden können.

Dabei verbleibt auf Grund des Abstandes zwischen der dem Fahrzeug **(102)** entlang der Fahrbahn **(103)** vorausfliegenden Drohne **(101)** und dem der Drohne **(101)** nachfolgend auf der Fahrbahn **(103)** fahrenden Fahrzeug **(102)** ein beträchtlicher zeitlicher Spielraum für die Übertragung von Informationen über den Datenstrom **(106)** und den Datenkanal **(105),** die Verarbeitung der Daten und ihre Verwendung zur Anpassung der Bewegungssteuerung des Fahrzeugs **(102)** und der Drohne **(102)** vermittels des fahrzeuginternen Regelgeräts **(107).**

Die Drohne **(101)** nimmt dabei mit ihrer bordeigenen Sensoreinheit Informationen und Daten über die Fahrbahn **(103)** auf. Nach der Verarbeitung dieser aufgenommenen Informationen und Daten werden diese von dem fahrzeuginternen Regelgerät **(107)** an relevante Fahrdynamikregelungssysteme weitergeleitet. Zu den relevanten Fahrdynamikregelungssysteme gehören Fahrassistenzsysteme, umfassend Traktionskontrolle und Spurhaltesysteme, Fahrzeugstabilitätssysteme, umfassend Antiblockiersystem (ABS), elektronisches Stabilitätsprogramm (ESP), Antriebsschlupfregelung, und Drehmomentverteilungssystem, Antriebsmanagementsysteme, umfassend ein Regelgerät, das die Leistungsaufnahme von Elektro-, Hybrid- oder Verbrennungsmotoren in Abhängigkeit von den Fahrbahneigenschaften oder den gemessenen Fahrzeugbetriebsparametern optimiert, und adaptive Fahrwerkssysteme, umfassend aktive Federung und aktive Lenkung.

Die Drohne **(101)** folgt in ihrem Flug dem Verlauf der Fahrbahn **(103),** auf der das zur Drohne **(101)** gehörende Fahrzeug **(102)** fährt. Die Drohnen-eigenen Sensoren ermöglichen dabei, das Fragment der Fahrbahn **(103)** vor dem, der Drohne **(101)** nachfolgenden Fahrzeug **(102)** im Sensorsichtfeld **(104)** zu erfassen, welches sich vor der Drohne **(101)** befindet.

Die so erfassten Daten werden über den Datenstrom **(106)** von der Drohne **(101)** an das fahrzeuginterne Regelgerät **(107)** übertragen.

Das fahrzeuginterne Regelgerät **(107)** steuert die Drohne und regelt die Fahrdynamik des Fahrzeugs **(102).**

Der Datenkanal **(105)** vom Fahrzeug **(102)** zur Drohne **(101)** wird genutzt, um die Daten für die künftige Trajektorie des Fahrzeugs **(102)** an die Drohne **(101)** zu übermitteln, damit die Drohne **(101)** dieser vorgegebenen Trajektorie bei ihrem Flug folgen kann.

Das fahrzeuginterne Regelgerät **(107)** stellt somit die Schnittstelle für Drohne **(101)** und Fahrzeug **(102)** bei der Steuerung und Regelung dieser beiden Komponenten der Anordnung zur Ermittlung der Fahrbahnparameter einer Fahrbahn **(103)** vor einem Fahrzeug **(102),** insbesondere zur Ermittlung der Fahrbahnparameter für die Unterstützung der Fahrdynamikregelung eines fahrenden Fahrzeugs **(102),** dar.

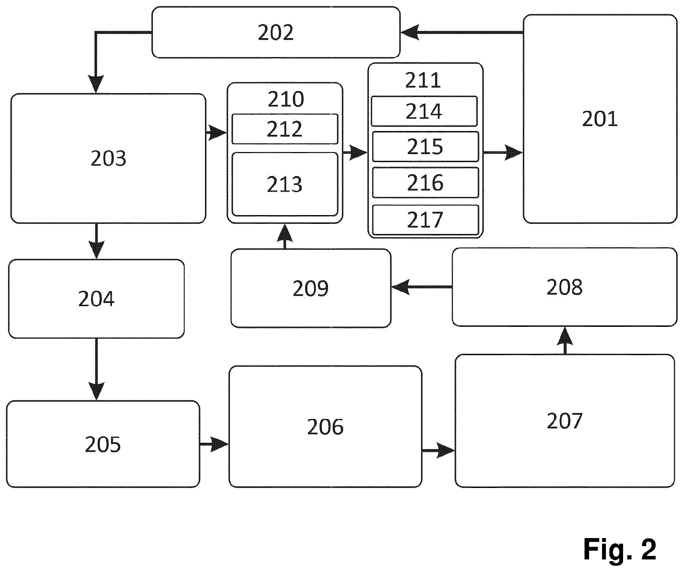

Fig. 2 zeigt ein Flussdiagramm eines Steuer- und Regelsystems unter Verwendung des fahrzeuginternen Regelgeräts für ein Fahrzeug mit Drohnenflugbegleitung entsprechend der Anordnung gemäß Fig. 1 zur Fahrzeug-Fahrdynamikregelung, welches mit einem Fahrdynamikregelungssystem **(201),** das daten- und informationsleitend mit dem fahrzeuginternen Regelgerät verbunden ist, und dessen Position in globalen Koordinaten unter Verwendung eines geeigneten globalen (nicht in Fig. 2 dargestellten) Positionierungssystems als GPS-Sensor **(202)** bestimmt wird.

Anhand der globalen Position des Fahrzeugs **(102)** sowie der Daten des Inertialsensors und einer Karte des Gebiets kann ein Schätzblock **(203)** einer Recheneinheit die Fahrzeugtrajektorie bestimmen und eine Referenzposition des Fahrzeugs **(102)** auf der Fahrbahn ermitteln. Die Ortungsgenauigkeit des Schätzblocks (203) reicht aus, um die Positionierung des Fahrzeugs in einer Fahrspur und die Abweichung beim Manövrieren zu bestimmen.

Anhand der ermittelten Position und Trajektorie der Drohne **(101)** wird in einer Recheneinheit **(204)** die zukünftige Flugbahn der Drohne **(101)** vorberechnet / vorgegeben. Dies kann mit verschiedenen Ansätzen erfolgen, z. B. auf der Grundlage der Straßenkarte für eine Autobahnfahrt, entsprechend einem vordefinierten Zielpunkt für die Stadtfahrt, unter Verwendung von Deep-Learning-Algorithmen für einen nicht definierten Fall oder unter Verwendung anderer Vorhersagemodelle.

Vermittels einer Übertragungseinheit **(205)** wird die berechnete künftige Fahrzeugtrajektorie als zu befolgender Referenzpfad über den Kommunikationskanal an die Drohne **(101)** übertragen. Diesem Pfad kann beispielsweise von Autopilot-Algorithmen gefolgt werden, um den Flug der Drohne **(101)** zu steuern.

Durch die voranstehend beschriebenen Schritte ist die Drohne **(101)** in der Lage, der Fahrbahn **(103)** zu folgen und vermittels ihrer Sensoren, mit denen sie ausgestattet ist, die Fahrbahn **(103)** in ihrem Sichtfeld **(104)** zu erfassen. Mithilfe der bordeigenen Sensoren sammelt die Drohne **(101)** dabei Informationen über den Zustand der Fahrbahnoberfläche. Dieser Prozess findet in einer Erfassungseinheit **(206)** statt, welche Bestandteil der Drohne **(101)** ist.

Diese Erfassungseinheit **(206)** umfasst die folgenden Komponenten zur Erfassung der Fahrbahnparameter:
- den Abstandssensor der Drohne **(101),**
- die Kamera **(301)** oder das Bildaufnahmegerät zur Aufnahme von Bildern der Fahrbahnoberfläche und
- den digitalen Marker zur Kennzeichnung der erfassten Parameter mit globalen Positionskoordinaten.

Eine Nachbearbeitungseinheit **(207)** führt die Nachbearbeitung der erfassten Sensordaten in der Art und Weise durch, dass sie eine Karte der Fahrbahn **(103)** erstellt und alle Informationen in einem Format zusammenfasst, das für die weitere Verwendung durch die Fahrdynamikregelungssysteme **(201)** des Fahrzeugs **(102)** geeignet ist.

Ferner werden in einer Speichereinheit **(208)** die generierten Informationen gespeichert und eine dynamische Karte mit fahrzeugbezogenen Parametern, d.h. eine Karte mit gespeicherten Datensätzen fahrbahnbezogener Daten für jede Fahrbahnposition erstellt. Diese generierten Daten werden über den Kommunikationskanal **(209)** an ein globales Regelgerät **(210)** des Fahrzeugs **(102)** weitergeleitet.

Das globale Regelgerät **(210)** des Fahrzeugs **(102)** berücksichtigt die Informationen der Speichereinheit **(208)** in Form der von der Drohne **(101)** aufgenommene und wie zuvorstehend beschrieben bearbeitete Daten (= dynamische Karte) und die geschätzte aktuelle Position des Fahrzeugs **(102)** auf der Fahrbahn **(103),** wodurch die vorausschauende Abstimmung oder Optimierung der Fahrdynamikregelungsstrategie durch das Fahrdynamikregelungssystem **(201)** realisiert wird, indem die Daten von diesem auf das fahrzeuginterne Regelgerät **(107)** übertragen werden.

Dabei können nach der Verarbeitung dieser aufgenommenen Informationen und Daten diese von dem fahrzeuginternen Regelgerät **(107)** an beliebige oben genannte relevante Fahrzeugdynamikregelungssysteme weitergeleitet werden.

Das globale Regelgerät **(210)** des Fahrzeugs **(102)** verfügt über Unterkomponenten in Form eines übergeordneten Fahrdynamikreglers **(212)** und eines Referenzfahrzeugmodells **(213),** das als Referenzgenerator für die relevanten Fahrzeugbewegungsparameter im Fahrzeugbewegungsregler **(212)** verwendet wird.

Das Signal des globalen Regelgeräts **(210)** wird einen untergeordneten Fahrdynamikregler **(211)** weitergeleitet, der in eine Vertikaldynamikregelungseinheit **(214),** eine Längsdynamikregelungseinheit **(215)** und eine Querdynamikregelungseinheit **(216)** als Unterkomponenten unterteilt ist und ggf. auch noch einen Autopiloten **(217)** als weitere Komponente umfassen kann.

Im Falle der Verwendung dieses zuvorstehend beschriebenen Steuer- und Regelsystems des fahrzeuginternen Regelgeräts für ein Fahrzeug mit Drohnenflugbegleitung in einem automatisierten Fahrzeug sind die Daten des globalen Regelgeräts **(210)** auch die Eingangsdaten für den Navigationssteuerungsalgorithmus des Autopiloten **(217).**

Die von dem untergeordneten Fahrdynamikregler **(211)** erzeugten Steuersignale werden schließlich von dem entsprechenden Fahrdynamikregelungssystem **(201)** umgesetzt.

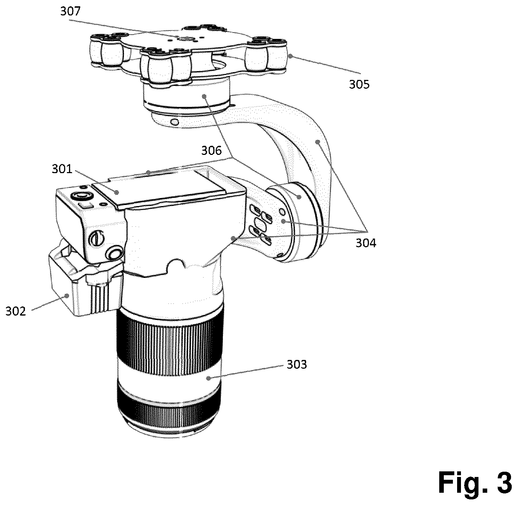

Fig. 3 zeigt ein Beispiel für eine Sensoreinheit der Ausführungsform der Anordnung gemäß Fig. 1 mit verschiedenen Sensoren, welche sich an der Drohne **(101)** als Teil der Erfassungseinheit **(206)** befinden und das Sichtfeld **(104)** der Drohne **(101)** generieren.

Diese Sensoreinheit umfasst die folgenden Komponenten:
einen Abstandssensor **(302),**
eine Kamera **(301)** mit Kameraobjektiv **(303)** oder ein Bildaufnahmegerät
und einen digitalen Marker zur Kennzeichnung der erfassten Parameter mit globalen Positionskoordinaten.

Die Hauptaufgabe dieser Sensoreinheit besteht darin, die Messausrüstung in einer geeigneten Position zu halten und das Manövrieren der Drohne in der gewünschten Ausrichtung zu ermöglichen.

Zu diesem Zweck sind die Kamera **(301),** der Abstandssensor **(302)** (im Ausführungsbeispiel ein Lidar) und das Kameraobjektiv **(303)** in einer Einheit ausgeführt. Der Abstandssensor (302) kann alternativ zum Lidar auch als Radar oder Ultraschallsensor ausgeführt sein.

Die Kamera **(301)** nimmt Bilder der Fahrbahn **(103)** in Echtzeit auf und überträgt sie an die Erfassungseinheit **(206).** Das Objektiv **(303)** der Kamera **(301)** ermöglicht die Einstellung der Brennweite, um das gewünschte Sichtfeld **(104)** für eine bessere Fahrbahnerkennung zu erhalten.

Das Lidar **(302)** ermöglicht die Berechnung der Objektabmessungen auf dem Bild und misst die Fahrbahnneigung und -rauigkeit.

Ein vorgesehener dreiachsiger Kardanrahmen **(304)** (im Beispiel ein Gimbals) ermöglicht die Einhaltung einer horizontalen Position für alle Messgeräte und vernachlässigt Verzerrungen der Sensordaten.

Eine vorgesehene Vibrationsplatte **(305)** ermöglicht es, Vibrationen zu vermeiden und die Qualität der erfassten Daten zu verbessern, indem der Kardanrahmen **(304)** von der Drohne **(101)** (in Figur 3 nicht dargestellt) hinsichtlich der Schwingung entkoppelt wird.

Eine vorgesehene elektronische Steuerungskomponenten **(306)** dient der Einstellung der Position der Kamera **(301)** und der Steuerung der Gierposition des Bildes, um der Fahrbahn **(103)** zu folgen.

Eine Kommunikationseinrichtung **(307)** empfängt alle erfassten Daten, welche an die Erfassungseinheit **(206)** mit nachfolgender Nachbearbeitungseinheit **(207)** übertragen werden.

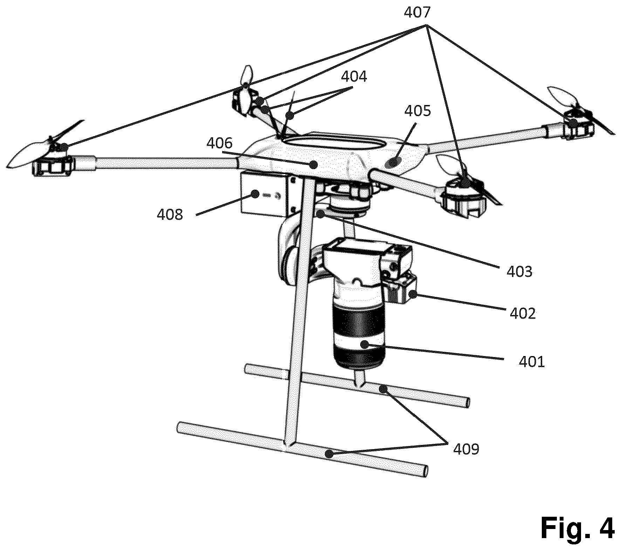

Fig. 4 zeigt eine Drohne **(101)** der Ausführungsform der Anordnung gemäß Fig. 1, wobei die für den Betrieb erforderlichen Mindestkomponenten dargestellt sind.

Die Drohne (101) umfasst:
- eine Bildaufnahmevorrichtung **(401),** die aus den oben für Fig. 3 beschriebenen Komponenten Kamera **(301)** und Lidar **(302)** besteht, und
- eine kardanische Aufhängung **(403),** welche im Beispiel eine ein Gimbal ist, die aus den Komponenten Kardanrahmen **(304),** Vibrationsplatte **(305)** und elektronische Steuerungskomponenten **(306)** besteht und es ermöglicht, die horizontale Position der Sensoren während der Messung der Fahrbahn **(103)** beizubehalten.

Ein vorgesehenes Telemetriegerät **(404)** ermöglicht die Kommunikation mit dem Fahrzeug **(102).** Dabei werden über das Telemetriegerät **(404)** der Datenkanal **(105)** und der Datenstrom **(106)** aufgebaut.

Der Sensor **(405)** ermöglicht die Bestimmung der globalen Position der Drohne **(101).** Mit Hilfe dieses Sensors werden die gesammelten Daten mit den Informationen über die Position der Drohne **(101)** verknüpft und werden als dynamische Karte aufgezeichnet.

Ein Drohnenrahmen **(406)** trägt alle Komponenten welche sich an der Drohne **(101)** befinden.

Vorgesehene Antriebssysteme **(407)** der Drohne **(101)** dienen dazu, die Bewegung der Drohne **(101)** in der Luft zu erzeugen und zu steuern.

Vorteilhaft ist die Drohne **(101)** mit mindestens einem Kollisionssensor **(408)** versehen, um die Kollision der Drohne **(101)** mit anderen Drohnen oder Objekten in der Flugbahn während des Fluges der Drohne **(101)** zu vermeiden.

Vorteilhaft verfügt der Drohnenrahmen **(406)** über zwei Drohnenstandbeine **(409),** welche dem Bodenkontakt / dem Abstellen vor dem Starten und beim Landen der Drohne **(101)** dienen.

Der Vorteil der hier bereitgestellten technischen Lösung gegenüber dem vorbekannten Stand der Technik besteht darin, dass die Drohne, während sie vor dem fahrenden Fahrzeug fliegt, in Echtzeit verschiedene Fahrbahnparameter misst und die dabei erfassten Messdaten sowie Informationen der Echtzeitanpassung von Funktionen und Algorithmen der fahrzeuginternen Regelsysteme und der Optimierung der Fahrzeugbewegung dienen, was dazu führt, dass die Fahrt des Fahrzeugs auf der Fahrbahn in vorausschauender Art und Weise beeinflusst wird, indem die Fahrbahnparameter, welche nicht unmittelbar vor dem Fahrzeug mit fahrzeuginternen Sensoren erfassbar sind, sondern in einem größeren Abstand vor dem Fahrzeug von bis zu eintausend Metern zur Erfassung vorliegen, ohne dass sie schon mit den fahrzeuginternen Sensoren erfasst werden, zur Fahrdynamikregelung des Fahrzeugantriebs einsetzbar sind.

Besonders vorteilhaft bei dieser technischen Lösung gegenüber dem vorbekannten Stand der Technik ist, dass sie zur Messung von Fahrbahnparametern von Fahrbahnen mit beliebiger Oberflächenqualität, beliebigem Fahrbahnverlauf und beliebigem Zustand geeignet ist. Es kann sich sowohl um Fahrbahnen mit glatter Oberfläche als auch um Fahrbahnen mit unebener, schadhafter Oberfläche, z. B. schadhafte Straßen und Wege, die Schlaglöcher und Höcker aufweisen, sowie auch um Fahrbahnen im Gelände (Off-road) handeln. Die Fahrbahnen können eine beliebige Neigung aufweisen, also horizontal, ansteigend oder abfallend verlaufen. Der Fahrbahnverlauf kann sowohl geradlinig als auch gekrümmt sein. Die Fahrbahnoberflächen können einen beliebigen Zustand aufweisen, beispielsweise können sie trocken, nass, verschneit oder vereist sein. Die Fahrbahnen können in mehrere Fahrspuren aufgeteilt sein.

Alle in der Beschreibung, den Ausführungsbeispielen und den nachfolgenden Ansprüchen dargestellten Merkmale können sowohl einzeln als auch in beliebiger Kombination miteinander erfindungswesentlich sein.

### Bezugszeichenliste:

- 101 -: Drohne
- 102 -: Fahrzeug
- 103 -: Fahrbahn
- 104 -: Sichtfeld der Drohne
- 105 -: Datenkanal vom Fahrzeug zur Drohne
- 106 -: Datenstrom von der Drohne an das fahrzeuginterne Regelgerät
- 107 -: fahrzeuginternes Regelgerät
- 201 -: Fahrdynamikregelungssystem
- 202 -: GPS-Sensor
- 203 -: Schätzblock einer Recheneinheit
- 204 -: Recheneinheit zur Vorgabe der zukünftigen Drohne-Flugbahn
- 205 -: Übertragungseinheit zur Übertragung der künftigen Fahrzeugtrajektorie als Referenzpfad für die Drohne
- 206 -: Erfassungseinheit
- 207 -: Nachbearbeitungseinheit
- 208 -: Speichereinheit
- 209 -: Kommunikationskanal
- 210 -: globales Regelgerät des Fahrzeugs
- 211 -: untergeordneter Fahrdynamikregler
- 212 -: übergeordneter Fahrdynamikregler
- 213 -: Referenzfahrzeugmodell
- 214 -: Vertikaldynamikregelungseinheit
- 215 -: Längsdynamikregelungseinheit
- 216 -: Querdynamikregelungseinheit
- 217 -: Autopilot
- 301 -: Kamera
- 302 -: Abstandssensor
- 303 -: Objektiv
- 304 -: Kardanrahmen
- 305 -: Vibrationsplatte
- 306 -: elektronische Steuerungskomponenten
- 307 -: Kommunikationseinrichtung
- 401 -: Bildaufnahmevorrichtung
- 402 -: Lidar
- 403 -: kardanische Aufhängung
- 404 -: Telemetriegerät
- 405 -: Sensor zur Bestimmung der globalen Position der Drohne
- 406 -: Drohnenrahmen
- 407 -: Antriebssysteme
- 408 -: Kollisionssensor
- 409 -: Drohnenstandbeine

## Patentansprüche

1. Anordnung zur Ermittlung von Parametern einer Fahrbahn (103) vor einem Fahrzeug (102) für die Unterstützung der Fahrdynamikregelung des Fahrzeugs (102) während seiner Fahrt, umfassend eine Drohne (101) zum Fliegen über der Fahrbahn (103) vor dem Fahrzeug (102), ein globales Positionierungssystem und das Fahrzeug (102) zum Fahren auf der Fahrbahn (103), wobei
• die Drohne (101) mit
▪ mindestens einem Antriebssystem für die Bewegung und Steuerung der Drohne,
▪ einem Sensorsystem zum Aufnehmen von Bildern der Fahrbahnoberfläche,
▪ einem Abstandssensor, der die Größe der Objekte auf der Fahrbahn, die Fahrbahnrauigkeit und die Fahrbahnneigung misst, ausgestattet ist
und das Fahrzeug (102) ein Fahrwerk und einen Antrieb umfasst, **dadurch gekennzeichnet, dass** die Drohne (101) mit
▪ einem dreiachsigen Kardanrahmen, der das Sensorsystem und den Abstandssensor in einer horizontalen Position hält,
▪ elektronischen Steuerungskomponenten, die die Position des dreiachsigen Kardanrahmens steuern,
▪ einer Vibrationsplatte, welche die Vibrationen des Sensorsystems und des Abstandsensors dämpft,
▪ einer Telemetrievorrichtung, die die Datenübertragung zwischen der Drohne und dem Fahrzeug sicherstellt,
▪ einem Sensor zur Bestimmung der globalen Position der Drohne,
▪ einem Sensor zum Erfassen von Objekten in der Bewegungsbahn der Drohne
▪ und einem Rahmen zum Tragen dieser Drohnen- Komponenten ausgestattet ist
und
• das Fahrzeug (102) mit
▪ mindestens einem Fahrdynamikregelungssystem,
▪ einem fahrzeuginternen Regelungssystem, das die Fahrzeugbewegung durch die Regelung des Fahrdynamikregelungssystem bestimmt,
▪ einer Fahrzeugkomponente des Global Positioning System zur Bestimmung der Fahrzeugposition,
▪ einem Inertialsensor, einer Recheneinheit zur Verarbeitung der gemessenen Daten und einer digitalen Karte
und
▪ einem Telemetriegerät, das eine kabellose daten- und informationsleitende Verbindung zwischen der Drohne (101) und dem Fahrzeug (102) generiert, ausgestattet ist,
wobei die Drohne (101) in einem Bereich vor dem Fahrzeug (102) fliegt und dabei in Echtzeit verschiedene Fahrbahnparameter misst sowie Messdaten erfasst, wobei diese gemessenen Parameter und Daten dem fahrzeuginternen Regelungssystem zur Optimierung der Fahrzeugbewegung durch Echtzeitanpassung des Fahrdynamikregelungssystems dienen.

2. Anordnung gemäß Anspruch 1, **dadurch gekennzeichnet, dass**
• das Sensorsystem zum Aufnehmen von Bildern der Fahrbahnoberfläche eine Kamera (301) ist, wobei die Kamera (301) ein Objektiv (303) zur Einstellung der Brennweite besitzt,
• der Abstandssensor ein Lidar (302) ist,
• der dreiachsige Kardanrahmen ein Gimbal (304) ist, welches die Kamera (301) mit dem Objektiv (303) und das Lidar (302) in einer horizontalen Position hält,
und
• das Telemetriegerät als Kommunikationseinrichtung (307) ausgeführt ist,
wobei
• eine Vibrationsplatte, welche die Vibrationen der Kamera (301) mit dem Objektiv (303) und dem Lidar (302) dämpft, vorgesehen ist,
• das fahrzeuginterne Regelungssystem ein fahrzeuginternes Regelgerät (107) ist,
• die kabellose daten- und informationsleitende Verbindung
- zum einen in Form eines Datenstroms (106) von der Drohne (101) zum fahrzeuginternen Regelgerät (107)
und
- zum anderen in Form eines Datenkanals (105) vom Fahrzeug (102) zur Drohne (101),
ausgebildet ist,
• die Drohne (101) ein Sichtfeld (104) aufweist, welches von der Drohne (101) bei ihrem Flug auf eine Fahrbahn (103) gerichtet ist, die sich vor dem Fahrzeug (101) befindet und auf welcher das Fahrzeug (101) fährt,
• die Drohne (101) teilautonom ist und vermittels der Sensordaten sowie der über den Datenkanal (105) vom Fahrzeug (102) zur Drohne (101) verlaufenden Daten gesteuert wird,
und
• der von der Drohne (101) mit ihren Sensoren erzeugte Datenstrom (106) zum fahrzeuginternen Regelgerät (107) führt, welches die Fahrt des Fahrzeugs (102) auf der Fahrbahn (103) beeinflusst, so dass die Fahrdynamik des Fahrzeugs (102) regelbar ist,
• wobei das fahrzeuginterne Regelgerät (107) als Schnittstelle zwischen Drohne (101) und Fahrzeug (102) bei der Steuerung und Regelung dieser beiden Komponenten dient.

3. Anordnung gemäß Anspruch 2, **dadurch gekennzeichnet, dass** die Kamera (301), das Lidar (302) und das Kameraobjektiv (303) in einer Einheit eingebaut sind, wobei die Kamera (301) Bilder der Fahrbahn (103) in Echtzeit aufnimmt, das Objektiv (303) die Einstellung der Brennweite ermöglicht, um das gewünschte Sichtfeld für eine bessere Fahrbahnerkennung zu erhalten, und das Lidar (302) die Berechnung der Objektabmessungen auf dem Bild ermöglicht sowie die Neigung und Rauigkeit der Fahrbahn (103) misst.

4. Anordnung gemäß Anspruch 2 oder 3, **dadurch gekennzeichnet, dass** die Drohne (101) eine Bildaufnahmevorrichtung (401) aufweist, die aus der Kamera (301) und dem Lidar (302) besteht, wobei das Lidar (302) ein Airborne-Lidar (402) ist, und eine kardanische Aufhängung in Form eines Gimbal (403) die Kamera (301) mit der Vibrationsplatte (305) und elektronische Steuerungskomponenten (306) des Gimbals (403) trägt und es ermöglicht, die horizontale Position der Sensoren während der Messung der Fahrbahn (103) beizubehalten.

5. Anordnung gemäß Anspruch 2, **dadurch gekennzeichnet, dass** der Abstandssensor ein Radar oder ein Ultraschallsensor ist.

6. Anordnung gemäß Anspruch 4, **dadurch gekennzeichnet, dass** ein Drohnenrahmen (406) alle Komponenten trägt.

7. Anordnung gemäß Anspruch 6, **dadurch gekennzeichnet, dass** das Telemetriegerät (404) die Kommunikation mit dem Fahrzeug (102) ermöglicht, wobei das Telemetriegerät (404) den Datenkanal (105) und den Datenstrom (106) aufbaut, und ein Sensor (405) die Bestimmung der globalen Position des Drohnenrahmens (406) ermöglicht und die gesammelten Daten mit den Informationen über die Position der Drohne (101) verknüpft und als Karte aufgezeichnet werden.

8. Anordnung gemäß einem oder mehreren der Ansprüche 2 bis 7, **dadurch gekennzeichnet, dass** das fahrzeuginterne Regelgerät (107) als Schnittstelle für Drohne (101) und Fahrzeug (102) bei der Steuerung und Regelung dieser beiden Komponenten über ein Fahrdynamikregelungssystem (201) daten- und informationsleitend mit einem Steuer- und Regelkreis verbunden ist, welcher
• das Fahrdynamikregelungssystem (201),
• einen GPS-Sensor (202),
• einen Schätzblock einer Recheneinheit (203),
• eine Recheneinheit (204) zur Vorgabe der zukünftigen Flugbahn der Drohne,
• eine Übertragungseinheit (205), welche zur Übertragung der künftigen Fahrzeugtrajektorie als zu befolgendem Referenzpfad daten- und informationsleitend mit der Drohne (101) verbunden ist,
• eine Erfassungseinheit (206), welche als Komponente zur Erfassung der Fahrbahnparameter von einem Abstandssensor der Drohne (101) und einer Kamera oder einem Bildaufnahmegerät der Drohne (101) zur Aufnahme von Bildern der Fahrbahnoberfläche Daten erhält und über einen digitalen Marker zur Kennzeichnung der erfassten Parameter mit globalen Positionskoordinaten verfügt,
• eine Nachbearbeitungseinheit (207),
• eine Speichereinheit (208), welche über einen Kommunikationskanal (209) mit einem globalen Regelgerät (210) des Fahrzeugs (102) in Verbindung steht und welche die generierten Informationen speichert und eine dynamische Karte erstellt,
und
• einen untergeordneten Fahrdynamikregler (211) umfasst.

9. Anordnung gemäß Anspruch 8, **dadurch gekennzeichnet, dass** das globale Regelgerät (210) Unterkomponenten in Form eines übergeordneten Fahrdynamikreglers (212) und eines Referenzfahrzeugmodells (213) umfasst, wobei das Referenzfahrzeugmodell (213) als Referenzgenerator für die relevanten Fahrzeugbewegungsparameter im übergeordneten Fahrdynamikregler (212) verwendet wird.

10. Anordnung gemäß Anspruch 8 oder 9, **dadurch gekennzeichnet, dass** der untergeordnete Fahrdynamikregler (211) eine Vertikaldynamikregelungseinheit (214), eine Längsdynamikregelungseinheit (215) und eine Querdynamikregelungseinheit (216) umfasst.

11. Anordnung gemäß Anspruch 10, **dadurch gekennzeichnet, dass** der untergeordnete Fahrdynamikregler (211) über einen Autopiloten (217) verfügt.

12. Verfahren zur Ermittlung der Fahrbahnparameter einer Fahrbahn (103) vor einem Fahrzeug (102) für die Unterstützung der Fahrdynamikregelung des Fahrzeugs (102) unter Verwendung einer Anordnung gemäß einem oder mehrerer der Ansprüche 1 bis 10, bei dem die von der Drohne (101) aufgezeichneten Daten verwendet werden, um ein Referenzfahrzeugmodell für die Bewegungsregelung des Fahrzeug (102) zu erzeugen, umfassend folgende Schritte:
• eine Bestimmung der tatsächlichen und der vorhergesagten Trajektorie des Fahrzeugs (102) sowie der Referenzposition des Fahrzeugs (102) auf der Fahrbahn (103) unter Verwendung des globalen Positionierungssystems, des Inertialsensors des Fahrzeugs (102) und der digitalen Karte,
• eine Übermittlung der Informationen über die vorhergesagte Trajektorie des fahrenden Fahrzeugs (102) an die fliegende Drohne (101),
• eine Festlegung des Referenzpfades des Fluges der Drohne (101), der mit der vorhergesagten Trajektorie des Fahrzeugs (102) identisch ist,
• ein Aktivieren des Fluges der Drohne (101) entsprechend dem Referenzpfad in einem Bereich vor dem Fahrzeug (102),
• eine kontinuierliche Erfassung der Informationen über die Fahrbahnparameter vermittels der auf der Drohne (101) installierten Sensoren und Messgeräte,
• eine Markierung der erfassten Informationen über die Fahrbahnparameter mit den globalen Positionskoordinaten,
• eine Nachbearbeitung der markierten erfassten Informationen über die Fahrbahnparameter in einem für die Verwendung in den Fahrzeugbewegungssteuerungssystemen verständlichen Format,
• ein Speichern der erzeugten, nachbearbeiteten Informationen über die Fahrbahnparameter,
• eine Weiterleitung der erzeugten nachbearbeiteten Informationen über die Fahrbahnparameter an das globale Regelgerät (210) des Fahrzeugs (102) unter Verwendung eines Kommunikationskanals und
• eine Entscheidung durch das globale Regelgerät (210) des Fahrzeugs (102) auf der Grundlage der empfangenen Informationen über die Fahrbahnparameter und die bestimmte Referenzposition des Fahrzeugs, ob eine Abstimmung oder Optimierung der Fahrzeugbewegungssteuerung erfolgt,
• wobei, wenn die Korrektur der Fahrzeugbewegung erforderlich ist,
▪ der übergeordneten Fahrdynamikregler (212) des globalen Regelgerät (210) des Fahrzeugs (102) ein Referenzfahrzeugmodell verwendet, um die Referenzlängs-, -quer- oder - vertikalparameter der Fahrzeugdynamik zu generieren, die mit den Fahrdynamikregelungssystemen des Fahrzeugs (102) realisiert werden,
▪ die erzeugten Referenzparameter in Form von Signalen an den untergeordneten Fahrdynamikregler (211) übertragen werden, und
▪ die Regelung der Fahrdynamikregelungssysteme durch den untergeordneten Fahrdynamikregler (211) mit der Vertikaldynamikregelungseinheit (214), der Längsdynamikregelungseinheit (215) und der Querdynamikregelungseinheit (216) zur Korrektur der Fahrzeugbewegung erfolgt.

13. Verfahren gemäß Anspruch 12, **dadurch gekennzeichnet, dass** die Verarbeitung der erfassten Informationen über die Fahrbahnparameter durch die auf der Drohne (101) oder durch das im Fahrzeug (102) installierte fahrzeuginterne Regelgerät (107) realisiert wird.

14. Verfahren gemäß Anspruch 12 oder Anspruch 13, **dadurch gekennzeichnet, dass** die Referenzlängs-, -quer- oder -vertikalparameter der Fahrzeugdynamik als Eingangsdaten für das im Fahrzeug (102) installierte Regelgerät (107) und das installierte globale Regelgerät (210) in Form eines Autopiloten-Navigationssteuerungsalgorithmus verwendet werden und
• die Bestimmung des Fahrbahnreibungskoeffizienten auf Basis der Lidar-Daten und der Bilddatenanalyse erfolgt,
• die Weiterleitung des bestimmten Fahrbahnreibungskoeffizienten an das Fahrzeug erfolgt
und
• die Informationen über den bestimmten Fahrbahnreibungskoeffizienten zur Radschlupf- Regelung verwendet werden.

15. Verfahren gemäß Anspruch 12, 13 oder 14, **dadurch gekennzeichnet, dass**
• eine Bestimmung der Fahrbahnneigung erfolgt und die bestimmte Fahrbahnneigung an das im Fahrzeug (102) installierte Regelgerät (107) weitergeleitet wird, um die Bremsregelung oder die Antriebsregelung des Fahrzeugs (102) zu regeln,
und /oder
• eine Bestimmung der Fahrbahnrauigkeit erfolgt und die bestimmte Fahrbahnrauigkeit an das im Fahrzeug (102) installierte Regelgerät (107) weitergeleitet wird, um die Vertikaldynamikregelungseinheit (214) des Fahrzeugs (102) zu regeln
und / oder
• eine Bestimmung der Fahrbahnkrümmung erfolgt und die bestimmte Fahrbahnkrümmung an das im Fahrzeug (102) installierte Regelgerät (107) weitergeleitet wird, um die Gierbewegungsregelung des Fahrzeugs zu regeln und / oder die Trajektorie zu berechnen, die vom Autopiloten im Falle eines automatisierten Fahrens realisiert wird.

## Claims

1. An arrangement for determining parameters of a roadway (103) in front of a vehicle (102) to assist in controlling the driving dynamics of the vehicle (102) during its journey, comprising a drone (101) for flying above the roadway (103) in front of the vehicle (102), a global positioning system, and the vehicle (102) for travelling on the roadway (103), wherein
• the drone (101) with
▪ at least one propulsion system for moving and controlling the drone,
▪ a sensor system for capturing images of the road surface,
▪ a distance sensor that measures the size of objects on the road, the road roughness and the road inclination
• and the vehicle (102) comprises a chassis and a drive system, **characterised in that** the drone (101) is equipped with
• a three-axis gimbal frame that holds the sensor system and the distance sensor in a horizontal position,
• electronic control components that control the position of the three-axis gimbal frame,
• a vibration plate that dampens the vibrations of the sensor system and the distance sensor,
• a telemetry device that ensures data transmission between the drone and the vehicle,
• a sensor for determining the global position of the drone,
• a sensor for detecting objects in the drone's path of movement,
• and a frame for carrying these drone components.
and
• the vehicle (102) with
▪ at least one driving dynamics control system,
▪ a vehicle-internal control system that determines the vehicle movement by controlling the driving dynamics control system,
▪ a vehicle component of the Global Positioning System for determining the vehicle position,
▪ an inertial sensor, a computing unit for processing the measured data and a digital map
and
▪ a telemetry device that generates a wireless data and information connection between the drone (101) and the vehicle (102),
wherein the drone (101) flies in an area in front of the vehicle (102), measuring various road parameters in real time and recording measurement data, whereby these measured parameters and data are used by the vehicle's internal control system to optimise the vehicle's movement by adjusting the driving dynamics control system in real time.

2. Arrangement according to claim 1, **characterised in that**
• the sensor system for capturing images of the road surface is a camera (301), wherein the camera (301) has a lens (303) for adjusting the focal length,
• the distance sensor is a lidar (302),
• the three-axis gimbal frame is a gimbal (304) which holds the camera (301) with the lens (303) and the lidar (302) in a horizontal position,
and
• the telemetry device is designed as a communication device (307),
whereby
• a vibration plate is provided which dampens the vibrations of the camera (301) with the lens (303) and the lidar (302),
• the vehicle-internal control system is a vehicle-internal control device (107),
• the wireless data and information transmission connection
- on the one hand, in the form of a data stream (106) from the drone (101) to the vehicle-internal control device (107)
and
- on the other hand, in the form of a data channel (105) from the vehicle (102) to the drone (101),
is formed,
• the drone (101) has a field of view (104) which is directed by the drone (101) during its flight onto a carriageway (103) located in front of the vehicle (101) and on which the vehicle (101) is travelling,
• the drone (101) is semi-autonomous and is controlled by means of the sensor data and the data transmitted from the vehicle (102) to the drone (101) via the data channel (105),
and
• the data stream (106) generated by the drone (101) with its sensors leads to the vehicle-internal control unit (107), which influences the movement of the vehicle (102) on the road (103) so that the driving dynamics of the vehicle (102) can be controlled,
• wherein the vehicle-internal control device (107) serves as an interface between the drone (101) and the vehicle (102) for the control and regulation of these two components.

3. Arrangement according to claim 2, **characterised in that** the camera (301), the lidar (302) and the camera lens (303) are installed in a single unit, wherein the camera (301) capturing images of the road (103) in real time, the lens (303) enabling the focal length to be adjusted in order to obtain the desired field of view for better road recognition, and the lidar (302) enabling the dimensions of objects in the image to be calculated and measuring the inclination and roughness of the road (103).

4. Arrangement according to claim 2 or 3, **characterised in that** the drone (101) has an image recording device (401) consisting of the camera (301) and the lidar (302), wherein the lidar (302) is an airborne lidar (402), and a cardanic suspension in the form of a gimbal (403) carries the camera (301) with the vibration plate (305) and electronic control components (306) of the gimbal (403) and enables the horizontal position of the sensors to be maintained during measurement of the roadway (103).

5. Arrangement according to claim 2, **characterised in that** the distance sensor is a radar or an ultrasonic sensor.

6. Arrangement according to claim 4, **characterised in that** a drone frame (406) supports all components.

7. Arrangement according to claim 6, **characterised in that** the telemetry device (404) enables communication with the vehicle (102), wherein the telemetry device (404) establishes the data channel (105) and the data stream (106), and a sensor (405) enables the global position of the drone frame (406) to be determined and links the collected data with the information about the position of the drone (101) and records it as a map.

8. Arrangement according to one or more of claims 2 to 7, **characterised in that** the vehicle-internal control device (107) is connected as an interface for the drone (101) and vehicle (102) in the control and regulation of these two components via a driving dynamics control system (201) for data and information transmission to a control and regulation circuit, which
• the driving dynamics control system (201),
• a GPS sensor (202),
• an estimation block of a computing unit (203),
• a computing unit (204) for specifying the future flight path of the drone,
• a transmission unit (205) which is connected to the drone (101) for the transmission of data and information relating to the future vehicle trajectory as a reference path to be followed,
• a detection unit (206) which, as a component for detecting the road parameters, receives data from a distance sensor of the drone (101) and a camera or an image recording device of the drone (101) for recording images of the road surface and has a digital marker for marking the detected parameters with global position coordinates,
• a post-processing unit (207),
• a storage unit (208) which is connected via a communication channel (209) to a global control device (210) of the vehicle (102) and which stores the generated information and creates a dynamic map,
and
• a subordinate driving dynamics controller (211).

9. Arrangement according to claim 8, **characterised in that** the global control device (210) comprises subcomponents in the form of a higher-level vehicle dynamics controller (212) and a reference vehicle model (213), wherein the reference vehicle model (213) is used as a reference generator for the relevant vehicle motion parameters in the higher-level vehicle dynamics controller (212).

10. Arrangement according to claim 8 or 9, **characterised in that** the subordinate driving dynamics controller (211) comprises a vertical dynamics control unit (214), a longitudinal dynamics control unit (215) and a lateral dynamics control unit (216).

11. Arrangement according to claim 10, **characterised in that** the subordinate driving dynamics controller (211) has an autopilot (217).

12. Method for determining the road parameters of a road (103) in front of a vehicle (102) to support the driving dynamics control of the vehicle (102) using an arrangement according to one or more of claims 1 to 10, in which the data recorded by the drone (101) to generate a reference vehicle model for motion control of the vehicle (102), comprising the following steps:
• determining the actual and predicted trajectory of the vehicle (102) and the reference position of the vehicle (102) on the road (103) using the global positioning system, the inertial sensor of the vehicle (102) and the digital map,
transmitting the information about the predicted trajectory of the moving vehicle (102) to the flying drone (101),
• determining the reference flight path of the drone (101), which is identical to the predicted trajectory of the vehicle (102),
• activating the flight of the drone (101) in accordance with the reference path in an area in front of the vehicle (102),
• continuous acquisition of information about the road parameters by means of the sensors and measuring devices installed on the drone (101),
• marking the collected information about the road parameters with the global position coordinates,
• post-processing the marked collected information about the road parameters in a format that can be understood for use in the vehicle motion control systems,
• storing the generated, post-processed information about the road parameters,
• forwarding the generated, post-processed information about the road parameters to the global control device (210) of the vehicle (102) using a communication channel,
and
• a decision by the global control device (210) of the vehicle (102), based on the received information about the road parameters and the determined reference position of the vehicle, whether to adjust or optimise the vehicle motion control,
• wherein, if correction of the vehicle motion is required,
▪ the higher-level driving dynamics controller (212) of the global control unit (210) of the vehicle (102) uses a reference vehicle model to generate the reference longitudinal, lateral or vertical parameters of the vehicle dynamics that are realised with the driving dynamics control systems of the vehicle (102),
▪ the generated reference parameters are transmitted in the form of signals to the subordinate driving dynamics controller (211),
and
▪ the driving dynamics control systems are controlled by the subordinate driving dynamics controller (211) with the vertical dynamics control unit (214), the longitudinal dynamics control unit (215) and the transverse dynamics control unit (216) to correct the vehicle movement.

13. Method according to claim 12, **characterised in that** the processing of the recorded information about the road parameters is carried out by the control device (107) installed on the drone (101) or in the vehicle (102)..

14. Method according to claim 12 or claim 13, **characterised in that** the reference longitudinal, transverse or vertical parameters of the vehicle dynamics are used as input data for the control device (107) installed in the vehicle (102) and the installed global control device (210) in the form of an autopilot navigation control algorithm, and
• the coefficient of road surface friction is determined on the basis of the lidar data and the image data analysis,
• the determined coefficient of road surface friction is transmitted to the vehicle,
and
• the information about the determined coefficient of road surface friction is used for wheel slip control.

15. Method according to claim 12, 13 or 14, **characterised in that**
• the road inclination is determined and the determined road inclination is forwarded to the control unit (107) installed in the vehicle (102) in order to control the braking control or the drive control of the vehicle (102),
and/or
• the roughness of the road surface is determined and the determined roughness of the road surface is forwarded to the control device (107) installed in the vehicle (102) in order to control the vertical dynamics control unit (214) of the vehicle (102)
and/or
the curvature of the road is determined and the determined curvature of the road is forwarded to the control device (107) installed in the vehicle (102) in order to control the yaw movement of the vehicle and/or to calculate the trajectory that is realised by the autopilot in the case of automated driving.

## Revendications

1. Dispositif pour déterminer les paramètres d'une chaussée (103) devant un véhicule (102) afin d'assister la régulation dynamique du véhicule (102) pendant sa conduite, comprenant un drone (101) destiné à voler au-dessus de la chaussée (103) devant le véhicule (102), un système de positionnement global et le véhicule (102) pour rouler sur la chaussée (103), dans lequel
• le drone (101) est équipé
▪ d'au moins un système d'entraînement pour le déplacement et le pilotage du drone,
▪ d'un système de capteurs pour enregistrer des images de la surface de la chaussée,
▪ d'un capteur de distance qui mesure la taille des objets sur la chaussée, la rugosité et l'inclinaison de la chaussée
et le véhicule (102) comprend un châssis et un système d'entraînement, **caractérisé en ce que** le drone (101) est équipé de
• un cadre à cardan à trois axes qui maintient le système de capteurs et le capteur de distance en position horizontale,
• des composants de commande électroniques qui contrôlent la position du cadre à cardan à trois axes,
• une plaque vibrante qui amortit les vibrations du système de capteurs et du capteur de distance,
• un dispositif de télémétrie qui assure la transmission des données entre le drone et le véhicule,
• un capteur pour déterminer la position globale du drone,
• un capteur pour détecter les objets se trouvant sur la trajectoire du drone
• et un châssis pour supporter ces composants du droneund
• le véhicule (102) avec
▪ au moins un système de contrôle de la dynamique de conduite,
▪ un système de contrôle interne au véhicule qui détermine le mouvement du véhicule en contrôlant le système de contrôle de la dynamique de conduite,
▪ un composant du système de positionnement global (GPS) du véhicule pour déterminer la position du véhicule,
▪ un capteur inertiel, une unité de calcul pour traiter les données mesurées et une carte numérique
et
▪ un appareil de télémétrie qui génère une connexion sans fil pour la transmission de données et d'informations entre le drone (101) et le véhicule (102),
le drone (101) volant dans une zone située devant le véhicule (102) et mesurant en temps réel différents paramètres de la chaussée et enregistrant des données de mesure, ces paramètres et données mesurés servant au système de régulation interne du véhicule pour optimiser le mouvement du véhicule par adaptation en temps réel du système de régulation de la dynamique de conduite.

2. Dispositif selon la revendication 1, **caractérisé en ce que**
• le système de capteurs destiné à enregistrer des images de la surface de la chaussée est une caméra (301), la caméra (301) comportant un objectif (303) permettant de régler la distance focale,
• le capteur de distance est un lidar (302),
• le cadre à cardan triaxial est un cardan (304) qui maintient la caméra (301) avec l'objectif (303) et le lidar (302) dans une position horizontale,
et
• le dispositif de télémétrie est conçu comme un dispositif de communication (307),
où
• une plaque vibrante qui amortit les vibrations de la caméra (301) avec l'objectif (303) et le lidar (302) est prévue,
• le système de régulation interne au véhicule est un appareil de régulation interne au véhicule (107),
• la connexion sans fil pour la transmission de données et d'informations
• d'une part sous la forme d'un flux de données (106) du drone (101) vers l'appareil de régulation interne au véhicule (107)
et
• d'autre part sous la forme d'un canal de données (105) du véhicule (102) vers le drone (101), est formée,
• le drone (101) présente un champ de vision (104) qui, pendant son vol, est orienté vers une chaussée (103) située devant le véhicule (101) et sur laquelle roule le véhicule (101),
• le drone (101) est semi-autonome et est commandé au moyen des données des capteurs ainsi que des données transmises du véhicule (102) au drone (101) via le canal de données (105),
et
• le flux de données (106) généré par le drone (101) à l'aide de ses capteurs est transmis à l'appareil de régulation interne au véhicule (107), qui influence la conduite du véhicule (102) sur la chaussée (103), de sorte que la dynamique de conduite du véhicule (102) peut être régulée,
• le dispositif de régulation interne au véhicule (107) servant d'interface entre le drone (101) et le véhicule (102) pour la commande et la régulation de ces deux composants.

3. Dispositif selon la revendication 2, **caractérisé en ce que** la caméra (301), le lidar (302) et l'objectif de caméra (303) sont intégrés dans une unité, la caméra (301) enregistre des images de la chaussée (103) en temps réel, l'objectif (303) permet de régler la distance focale afin d'obtenir le champ de vision souhaité pour une meilleure reconnaissance de la chaussée, et le lidar (302) permet de calculer les dimensions des objets sur l'image et mesure l'inclinaison et la rugosité de la chaussée (103).

4. Dispositif selon la revendication 2 ou 3, **caractérisé en ce que** le drone (101) comporte un dispositif de prise de vue (401) composé de la caméra (301) et du lidar (302), le lidar (302) étant un lidar aéroporté (402), et une suspension à cardan sous la forme d'un cardan (403) supporte la caméra (301) avec la plaque vibrante (305) et les composants de commande électroniques (306) du cardan (403) et permet de maintenir la position horizontale des capteurs pendant la mesure de la chaussée (103).

5. Dispositif selon la revendication 2, **caractérisé en ce que** le capteur de distance est un radar ou un capteur à ultrasons.

6. Dispositif selon la revendication 4, **caractérisé en ce qu'**un châssis de drone (406) supporte tous les composants.

7. Dispositif selon la revendication 6, **caractérisé en ce que** le dispositif de télémétrie (404) permet la communication avec le véhicule (102), le dispositif de télémétrie (404) établissant le canal de données (105) et le flux de données (106), et un capteur (405) permet de déterminer la position globale du châssis du drone (406) et les données collectées sont associées aux informations sur la position du drone (101) et enregistrées sous forme de carte.

8. Dispositif selon une ou plusieurs des revendications 2 à 7, **caractérisé en ce que** le dispositif de régulation interne au véhicule (107) est relié, en tant qu'interface pour le drone (101) et le véhicule (102) lors de la commande et de la régulation de ces deux composants via un système de régulation de la dynamique de conduite (201), à un circuit de commande et de régulation qui gère les données et les informations et qui
• le système de contrôle dynamique de conduite (201),
• un capteur GPS (202),
• un bloc d'estimation d'une unité de calcul (203),
• une unité de calcul (204) pour spécifier la trajectoire future du drone,
• une unité de transmission (205) qui est connectée au drone (101) pour transmettre la trajectoire future du véhicule en tant que trajectoire de référence à suivre, en acheminant les données et les informations,
• une unité de détection (206) qui, en tant que composant destiné à détecter les paramètres de la chaussée, reçoit des données provenant d'un capteur de distance du drone (101) et d'une caméra ou d'un appareil de prise de vue du drone (101) pour enregistrer des images de la surface de la chaussée, et dispose d'un marqueur numérique pour marquer les paramètres détectés avec des coordonnées de position globales,
• une unité de post-traitement (207),
• une unité de stockage (208) qui est reliée via un canal de communication (209) à un dispositif de régulation global (210) du véhicule (102) et qui stocke les informations générées et crée une carte dynamique,
et
• un régulateur de dynamique de conduite subordonné (211).

9. Dispositif selon la revendication 8, **caractérisé en ce que** le dispositif de régulation global (210) comprend des sous-composants sous la forme d'un régulateur de dynamique de conduite supérieur (212) et d'un modèle de véhicule de référence (213), le modèle de véhicule de référence (213) étant utilisé comme générateur de référence pour les paramètres de mouvement du véhicule pertinents dans le régulateur de dynamique de conduite supérieur (212).

10. Dispositif selon la revendication 8 ou 9, **caractérisé en ce que** le régulateur de dynamique de conduite subordonné (211) comprend une unité de régulation de la dynamique verticale (214), une unité de régulation de la dynamique longitudinale (215) et une unité de régulation de la dynamique transversale (216).

11. Dispositif selon la revendication 10, **caractérisé en ce que** le régulateur de dynamique de conduite subordonné (211) dispose d'un pilote automatique (217).

12. Procédé pour déterminer les paramètres d'une chaussée (103) devant un véhicule (102) afin d'assister la régulation de la dynamique de conduite du véhicule (102) à l'aide d'un dispositif selon une ou plusieurs des revendications 1 à 10, dans lequel les données enregistrées par le drone (101) sont utilisées pour générer un modèle de véhicule de référence pour la régulation du mouvement du véhicule (102), comprenant les étapes suivantes:
• une détermination de la trajectoire réelle et prévue du véhicule (102) ainsi que de la position de référence du véhicule (102) sur la chaussée (103) à l'aide du système de positionnement global, du capteur inertiel du véhicule (102) et de la carte numérique,
• une transmission des informations relatives à la trajectoire prévue du véhicule en mouvement (102) au drone volant (101),
• détermination de la trajectoire de référence du vol du drone (101), qui est identique à la trajectoire prévue du véhicule (102),
• activation du vol du drone (101) conformément à la trajectoire de référence dans une zone située devant le véhicule (102),
• une acquisition continue des informations sur les paramètres de la chaussée à l'aide des capteurs et des appareils de mesure installés sur le drone (101),
• un marquage des informations acquises sur les paramètres de la chaussée avec les coordonnées de position globales,
▪ un post-traitement des informations enregistrées et marquées concernant les paramètres de la chaussée dans un format compréhensible pour une utilisation dans les systèmes de contrôle des mouvements du véhicule,
▪ un stockage des informations générées et post-traitées concernant les paramètres de la chaussée,
▪ une transmission des informations retraitées générées sur les paramètres de la chaussée à l'unité de commande globale (210) du véhicule (102) à l'aide d'un canal de communication, et
• une décision prise par le dispositif de commande global (210) du véhicule (102) sur la base des informations reçues sur les paramètres de la chaussée et de la position de référence déterminée du véhicule, quant à savoir si un ajustement ou une optimisation de la commande du mouvement du véhicule doit être effectué,
• dans lequel, si la correction du mouvement du véhicule est nécessaire,
et
• la régulation des systèmes de régulation de la dynamique de conduite est effectuée par le régulateur de dynamique de conduite subordonné (211) avec l'unité de régulation de la dynamique verticale (214), l'unité de régulation de la dynamique longitudinale (215) et l'unité de régulation de la dynamique transversale (216) afin de corriger le mouvement du véhicule.

13. Procédé selon la revendication 12, **caractérisé en ce que** le traitement des informations enregistrées concernant les paramètres de la chaussée est réalisé par le drone (101) ou par le dispositif de régulation interne au véhicule (107) installé dans le véhicule (102).

14. Procédé selon la revendication 12 ou la revendication 13, **caractérisé en ce que** les paramètres de référence longitudinaux, transversaux ou verticaux de la dynamique du véhicule sont utilisés comme données d'entrée pour le dispositif de régulation (107) installé dans le véhicule (102) et le dispositif de régulation global (210) installé sous la forme d'un algorithme de commande de navigation du pilote automatique, et
• la détermination du coefficient de frottement de la chaussée s'effectue sur la base des données lidar et de l'analyse des données d'image,
• le coefficient de frottement de la chaussée déterminé est transmis au véhicule
et
• les informations relatives au coefficient de frottement de la chaussée déterminé sont utilisées pour la régulation du patinage des roues.

15. Procédé selon les revendications 12, 13 ou 14, **caractérisé en ce que**
• une détermination de l'inclinaison de la chaussée est effectuée et l'inclinaison de la chaussée déterminée est transmise à l'appareil de régulation (107) installé dans le véhicule (102) afin de réguler la régulation du freinage ou la régulation de l'entraînement du véhicule (102),
et/ou
• une détermination de la rugosité de la chaussée est effectuée et la rugosité de la chaussée déterminée est transmise à l'appareil de régulation (107) installé dans le véhicule (102) afin de réguler l'unité de régulation de la dynamique verticale (214) du véhicule (102)
et/ou
une détermination de la courbure de la chaussée est effectuée et la courbure de la chaussée déterminée est transmise à l'appareil de régulation (107) installé dans le véhicule (102) afin de réguler le mouvement de lacet du véhicule et/ou de calculer la trajectoire qui sera suivie par le pilote automatique en cas de conduite automatisée.
